# EUROPEAN PATENT SPECIFICATION

(11) **EP 2 728 661 B1**
(45) Date of publication and mention of the grant of the patent: **07.12.2016**
(21) Application number: 12190528.5
(22) Date of filing: 30.10.2012
(51) Int. Cl.: B60H 1/00, B60R 16/04, B60K 1/04, F02M 35/08, F02M 35/10, F02M 35/108, F02M 35/16, H01M 2/10, H01M 10/625, H01M 10/663, H01M 10/6563, B60K 13/02, B60K 1/00

(54) **System for the ventilation of a vehicle battery compartment especially of an industrial vehicle**
System zur Belüftung eines Fahrzeugbatteriefachs insbesondere eines Nutzfahrzeugs
Système pour l'aération d'un compartiment de batterie de véhicule, en particulier pour véhicule industriel

(43) Date of publication of application: 07.05.2014
(73) Proprietor: IVECO S.p.A., 10156 Torino (IT)
(72) Inventor: Bertozzi, Franco, 10040 Druento (IT)
(74) Representative: Franzolin, Luigi

(56) References cited:
- EP-A2- 1 013 512
- DE-A1- 19 725 336
- DE-A1- 19 730 188
- DE-A1-102011 006 648
- DE-C1- 3 736 777
- JP-A- 2006 001 489
- US-A- 4 976 327
- US-A- 5 542 489
- US-A1- 2003 226 653
- US-A1- 2011 183 599
- US-B2- 6 564 768

## Description

### Application field of the invention

The present invention refers to a system for the ventilation of a vehicle battery compartment, especially of an industrial vehicle. It is above all addressed to those vehicles where the battery compartment is adjacent to the filter housing, even outside the vehicle cabin.

### Description of the prior art

The battery compartment of industrial vehicles is generally arranged laterally, fixed to the vehicle frame and cantilevered with respect to it.

Such position have always been considered as very advantageous, since it improves the accessibility to the compartment itself.

From the one hand, indeed, it is necessary to reach the compartment for checking the conditions of the batteries, of their respective connections and of the compartment itself, which may often be attacked by the acid fumes of the batteries themselves.

On the other hand, it is important to point out that batteries are particularly heavy, and that an easily accessible compartment facilitates the replacement of the batteries themselves.

Such compartments usually appear as boxes substantially shaped as a closed parallelepiped, made of metal, plastic or mixed material.

They have a metal or plastic lid which upperly closes the battery compartment, in order to protect the batteries from accidental short circuits or from water, dust or other external agents.

Changing the air in the battery compartment is always critical, since the exposition to the sun and/or to external sources of heat, such as for example the components of the exhaust system or of other vehicle circuits, determines the increase of the internal temperature of the compartment and consequently of the batteries contained therein.

The temperature reached in the battery compartment depends on various factors such as compartment dimensions, battery dimensions and capacity, also in relation to the dimensions of the compartment and to the quantity of electrolyte contained in the batteries and to the proximity from external sources of heat.

These factors determine heating cycles which deteriorate functionality and life of the batteries.

Such problem is particularly felt for those vehicles moving very slowly, such as for example earthworks machines or vehicles intended to be used in the city traffic. In this case, the convection cooling not only of the battery compartment but also of the catalyst and of the engine is particularly reduced.

For this purpose, the opening of appropriate cooling slots makes the problem even worse. This is because the opening of slots in the battery compartment increases the air circulation, but privileges only the battery/ies nearer to the front part of the vehicle. This generates a temperature difference between the batteries, that determines a different electrochemical functioning of the batteries themselves further accelerating the ageing process.

JP2006001489 shows the features of the preamble of claim 1.

### Summary of the invention

Therefore the aim of the present invention is to overcome all the aforementioned drawbacks and to provide a system for extracting air from a battery compartment of an industrial vehicle which limits the overheating of the batteries.

It is object of the present invention a system for the ventilation of a vehicle battery compartment, according to claim 1.

A further object of the present invention is a ground vehicle comprising the aforementioned system for extracting air.

The present invention will be described more fully in the claims, that are an integral part of the present invention.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
- figure 1 schematically shows a perspective view of a possible embodiment of a vehicle integrating the system that is object present invention;
- figure 2 shows an alternative embodiment of the system of figure 1;
- figures 3 and 4 show construction details of a preferred alternative embodiment of a portion of the system of the previous figures;
- figure 5 show a control and power supply circuit of the portion shown in figures 3 and 4.

In the figures the same reference numbers and letters identify the same elements or components.

### Detailed description of preferred embodiments of the invention

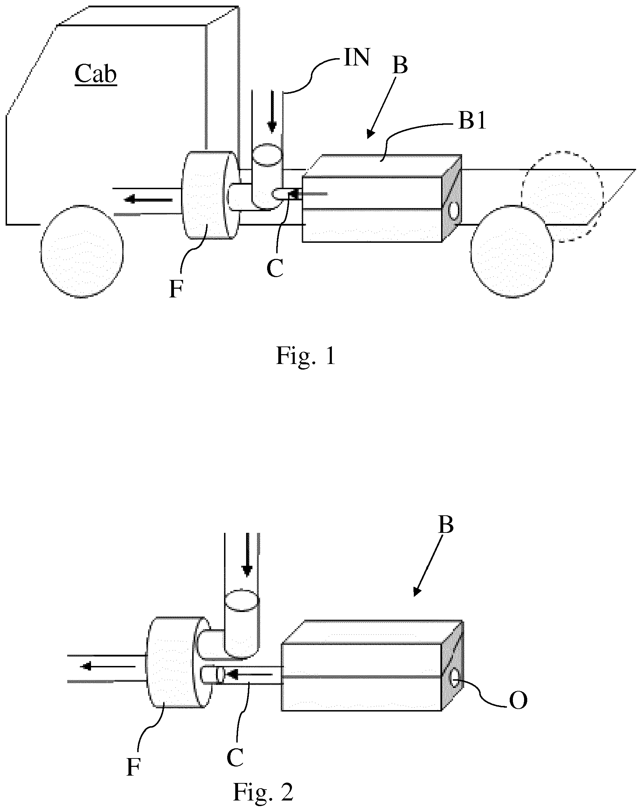

With reference to figures 1 and 2, the system according to the present invention provides the pneumatic connection between the filter housing F of the internal combustion engine and the battery compartment B of the vehicle.

The filter housing comprises an intake duct IN for sucking fresh air from the environment. Thus, according to the alternative embodiment shown in figure 1, the pneumatic connection is made by means of said intake duct IN. Figure 2, instead, shows an alternative embodiment wherein the pneumatic connection is made directly between the filter housing F and the battery compartment B.

Such pneumatic connection, according to the shown alternative embodiments, is made by means of a tube-like duct C.

Such duct is preferably connected to the battery compartment in an upper part of the latter, in order to collect the hot air accumulating under the lid.

Advantageously, in a lot of industrial vehicles, the filter housing is arranged outside the cabin and in its lower part. Thus the filter housing and the battery compartment are often adjacent. Thus the modification to be implemented on the vehicles known in the art is limited, with ducts C being just a few centimetres long.

According to another aspect of the invention, the cross section of the duct C is such that the flow rate of the air sucked from the battery compartment is limited to a small percentage of the whole fresh air sucked by the internal combustion engine. According to a preferred embodiment, such percentage is lower than 30% of the whole fresh air. According to a further preferred alternative embodiment, such percentage is 5-10%. The latter percentage is preferable, since it ensures a sufficient change of air in the battery compartment, without overheating the air sucked by the engine, representing the best possible trade-off in relation to the tests performed.

Along the duct C, automatic means for closing the duct C itself may be provided, not shown, in case of detection of water in the duct C itself or in the battery compartment. As an alternative, water stopping means may be provided, such as filters, bends, etc.. These means are advantageous, in order to prevent the water to reach the internal combustion engine. Black arrows shown in the figures indicate the direction of movement of the intake air of the internal combustion engine. According to the present invention, the battery compartment comprises a window 0, possibly provided with a grille in order to facilitate the intake of fresh air in the compartment itself.

The solution described so far may be adopted also in cars and in any other vehicle motorized with internal combustion engines.

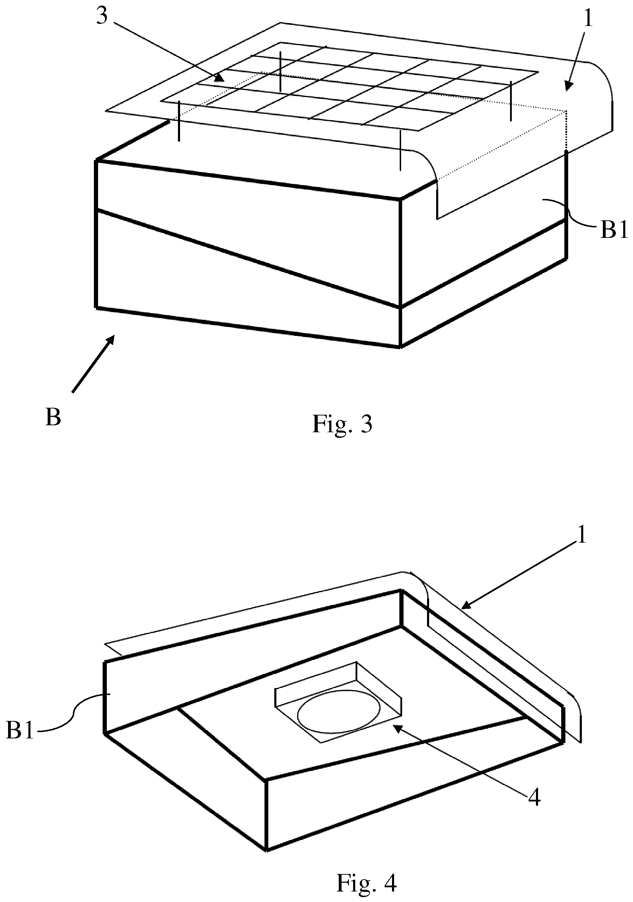

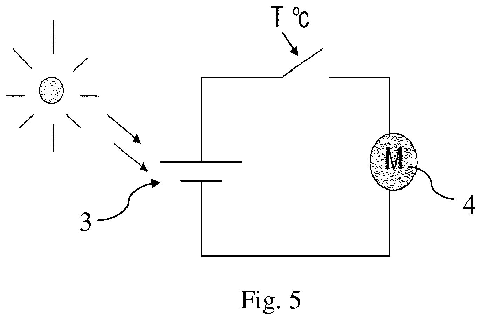

According to a further alternative embodiment of the invention, the lid B1 of the battery compartment, suitable to upperly close/define the compartment itself, according to a reciprocally complementary coupling, is equipped with a system for introducing air within the battery compartment B. Such additional ventilation system, that may be integrated in the lid B1, comprises, with reference to figures 3 and 4
- an electric fan 4 associated to the lid B1,
- the lid B1 comprises a through opening (not shown) which allows the electric fan 4 to introduce/suck fresh air of the environment within the battery compartment B,
- a protection 1 is fixed to cover, at least partially, the lid 5, in order to screen it from the sun radiation R, as shown in figure 5,
- a photovoltaic generator 3 fixed on said protection (1) or defining the protection 1 and electrically connected to the electric fan 4 to feed it,
- a thermostat T is arranged inside the compartment B in order to activate the electric fan 4 when the internal temperature exceeds a predetermined threshold.
When the vehicle is at a standstill, the additional ventilation system provides for the ventilation of the battery compartment B. When the internal combustion engine is working, the two systems cooperate, the fan 4 introducing air in the compartment B and the internal combustion engine sucking it at the same time.

According to a preferred embodiment of the invention, the fan 4 sucks air from the battery compartment. According to another preferred embodiment of the invention, the fan 4 sucks air from the battery compartment until the vehicle engine is stopped.

If the thermostat T is not present, the electric fan 4 works independently of the temperature in the battery compartment and/or the operating state of the engine.

Being the cover 1 superimposed to the outlet of the electric fan, the functioning of the electric fan tends to reduce also the temperature of the photovoltaic generator 3 which improves its efficiency.

Moreover, the arrangement of the cover 1 on the lid B1 advantageously protects the compartment itself from the direct radiation R and protects mechanically the electric fan 4.

Advantageously, in the alternative embodiment wherein the whole additional ventilation system is integrated in the lid, it is evident that such lid may replace a pre-existing lid without any modification, both as an optional device that can be used at the discretion of the vehicle driver, and as a device used before the delivery and selling of the vehicle. Advantageously, such lid is electrically autonomous, at least until it is not directly exposed to the sun radiation. If it is necessary for device to operate also when it is not directly exposed to the sun radiation, thin-film solar cells may be used, which ensure a good performance, also when exposed to diffused sun radiation.

It will be apparent to the person skilled in the art that other alternative and equivalent embodiments of the invention can be conceived and reduced to practice without departing from the scope of the intervention as defined in the claims.

## Claims

1. Ventilation system of a battery compartment (B) of a vehicle, the vehicle comprising an internal combustion engine and a filter housing (F) for filtering fresh air sucked by the internal combustion engine, the system comprising a pneumatic connection (C) connecting the battery compartment (B) with said filter housing (F), an electric fan (4) for introducing/extracting fresh air in/from the battery compartment (B) and a window (O) in order to facilitate the intake of fresh air in the compartment **characterised in that** electric fan (4) introduces air in the compartment (B) and the internal combustion engine sucking it at the same time, when the internal combustion engine is working.

2. System according to claim 1, wherein said filter housing (F) further comprises a fresh air intake duct (IN) and wherein said pneumatic connection is made through said fresh air intake duct (IN).

3. System according to claim 1, wherein said pneumatic connection is made directly between said battery compartment (B) and said filter housing (F).

4. System according to claim 1, wherein a lid (B1) of said battery compartment comprises
- said electric fan (4),
- The window (0) which allows the electric fan (4) to introduce fresh air of the environment within the battery compartment (B).

5. System according to claim 4, wherein said lid (B1) further comprises
- a protection (1) fixed to cover at least partially the lid (B1), in order to screen it from the sun radiation (R),
- a photovoltaic generator (3) fixed on said protection (1) or defining the protection (1) and electrically connected to the electric fan (4) to feed it,
- an optional thermostat T arranged within the compartment (B) for activating the electric fan (4) only when the internal temperature exceeds a predetermined threshold.

6. Ground vehicle comprising the ventilation system according to any one of the previous claims from 1 to 5.

7. Ground vehicle according to claim 6, of the industrial type having a cabin (Cab) and a filter housing (F) placed externally and in the rear of the cabin and a battery compartment arranged in a position adjacent to the filter housing (F).

## Patentansprüche

1. Belüftungssystem für ein Batteriefach (B) eines Fahrzeugs, welches Fahrzeug einen inneren Verbrennungsmotor und ein Filtergehäuse (F) zur Filterung von Frischluft umfasst, die von dem inneren Verbrennungsmotor angesaugt wird, welches System eine pneumatische Verbindung (C) umfasst, die das Batteriefach (B) im Filtergehäuse (F) verbindet, und einen elektrischen Ventilator (4) zur Einleitung/Ausleitung von Frischluft in das bzw. aus dem Batteriefach (B), und ein Fenster (O) zur Vereinfachung des Einlasses von Frischluft in das Fach, **dadurch gekennzeichnet, dass** der elektrische Ventilator (4) Luft in das Fach (B) einführt und der innere Verbrennungsmotor diese gleichzeitig ansaugt, wenn der innere Verbrennungsmotor läuft.

2. System gemäß Anspruch 1, bei welchem das Filtergehäuse (F) ferner eine Frischluft-Einlassleitung (IN) umfasst und die pneumatische Verbindung durch die Frischlufteinlassleitung (IN) geschaffen wird.

3. System gemäß Anspruch 1, bei welchem die pneumatische Verbindung direkt zwischen dem Batteriefach (B) und dem Filtergehäuse (F) hergestellt ist.

4. System gemäß Anspruch 1, bei welchem ein Deckel (D1) des Batteriefachs umfasst:
- den elektrischen Ventilator (4),
- das Fenster (O), welches die Einführung von Frischluft aus der Umgebung in das Batteriefach (F) durch den Ventilator (4) ermöglicht.

5. System gemäß Anspruch 4, bei welchem der Deckel (D1) ferner umfasst:
- einen Schutz (1) zur zumindest teilweisen Abdeckung des Deckels (D1), um diesen vor Sonneneinstrahlung (R) zu schützen,
- einen photovoltaischen Generator (3), der auf dem Schutz (1) befestigt ist oder den Schutz (1) bildet und elektrisch mit dem elektrischen Ventilator (4) zu dessen Speisung verbunden ist,
- einen optionalen Thermostaten (T), der in dem Fach (B) zur Aktivierung des elektrischen Ventilators (4) ausschließlich dann, wenn die innere Temperatur eine vorbestimmte Schwelle überschreitet, angeordnet ist.

6. Bodenfahrzeug, umfassend das Ventilationssystem gemäß einem der vorhergehenden Ansprüche 1 bis 5.

7. Bodenfahrzeug gemäß Anspruch 6, bei welchem es sich um ein Industriefahrzeug handelt, mit einer Kabine (Cab) und einem Filtergehäuse (F), das außen und an der Rückseite der Kabine angeordnet ist, und einem Batteriefach, das in einer Position benachbart zu dem Filtergehäuse (F) angeordnet ist.

## Revendications

1. Système de ventilation d'un compartiment de batterie (B) d'un véhicule, le véhicule comprenant un moteur à combustion interne et un logement de filtre (F) pour filtrer l'air frais aspiré par le moteur à combustion interne, le système comprenant une liaison pneumatique (C) reliant le compartiment de batterie (B) avec ledit logement de filtre (F), un ventilateur électrique (4) pour introduire/extraire de l'air frais dans/du compartiment de batterie (B), et une ouverture (0) afin de faciliter l'admission d'air frais dans le compartiment, **caractérisé en ce que** le ventilateur électrique (4) introduit l'air dans le compartiment (B) et le moteur à combustion interne en l'aspirant simultanément, lorsque le moteur à combustion interne fonctionne.

2. Système selon la revendication 1, dans lequel ledit logement de filtre (F) comprend en outre un conduit d'admission d'air frais (IN), et dans lequel ladite liaison pneumatique est effectuée par l'intermédiaire dudit conduit d'admission d'air frais (IN).

3. Système selon la revendication 1, dans lequel ladite liaison pneumatique est effectuée directement entre ledit compartiment de batterie (B) et ledit logement de filtre (F).

4. Système selon la revendication 1, dans lequel un couvercle (B1) dudit compartiment de batterie comprend
- ledit ventilateur électrique (4),
- l'ouverture (0) qui permet au ventilateur électrique (4) d'introduire de l'air frais de l'environnement dans le compartiment de batterie (B).

5. Système selon la revendication 4, dans lequel ledit couvercle (B1) comprend en outre
- une protection (1) fixée de manière à recouvrir au moins partiellement le couvercle (B1), afin de le protéger du rayonnement du soleil (R),
- un générateur photovoltaïque (3) fixé sur ladite protection (1) ou définissant la protection (1) et connecté électriquement au ventilateur électrique (4) pour l'alimenter,
- un thermostat T optionnel agencé dans le compartiment (B) pour activer le ventilateur électrique (4) uniquement lorsque la température interne dépasse un seuil prédéterminé.

6. Véhicule terrestre comprenant le système de ventilation selon l'une quelconque des revendications 1 à 5 précédentes.

7. Véhicule terrestre selon la revendication 6, du type industriel comportant une cabine (Cab) et un logement de filtre (F) placé à l'extérieur et à l'arrière de la cabine et un compartiment de batterie agencé à une position adjacente au logement de filtre (F).
